# EUROPÄISCHE PATENTSCHRIFT

(11) **EP 3 218 107 B1**
(45) Veröffentlichungstag und Bekanntmachung des Hinweises auf die Patenterteilung: **26.09.2018**
(21) Anmeldenummer: 15794534.6
(22) Anmeldetag: 10.11.2015
(51) Int. Cl.: B01L 3/00, G01N 15/10

(54) **VERFAHREN UND VORRICHTUNG ZUM SORTIEREN VON MIKROPARTIKELN IN EINEM FLUIDSTROM**
METHOD AND DEVICE FOR SORTING MICROPARTICLES IN A FLUID FLOW
PROCÉDÉ ET DISPOSITIF PERMETTANT DE TRIER DES MICROPARTICULES DANS UN FLUX DE FLUIDE

(30) Priorität: 12.11.2014 DE 102014116567
(43) Veröffentlichungstag der Anmeldung: 20.09.2017
(73) Patentinhaber: Fraunhofer-Gesellschaft zur Förderung der angewandten Forschung e.V., 80686 München (DE)
(72) Erfinder: NOLL, Reinhard, 52076 Aachen (DE); LENENBACH, Achim, 52146 Würselen (DE); MEINEKE, Georg, 52064 Aachen (DE); MATHIS, Harald, 53175 Bonn (DE)
(86) Internationale Anmeldenummer: PCT/EP2015/076263
(87) Internationale Veröffentlichungsnummer: WO 2016/075172

(56) Entgegenhaltungen:
- US-A1- 2004 022 685
- US-A1- 2009 090 422

## Beschreibung

Die Anmeldung betrifft eine Vorrichtung zum Sortieren von Mikropartikeln in einem Fluidstrom, wobei die Vorrichtung mindestens eine Detektionseinheit zum Detektieren von einen Detektionsbereich passierenden Mikropartikeln in dem Fluidstrom und zum Erzeugen eines Identifikationssignals, eine Verzweigung mit mindestens einem Eingang und mindestens zwei Ausgängen, wobei mindestens ein Ausgang eine Schaltstelle aufweist, und eine Schalteinheit zum Schalten der Verzweigung in Abhängigkeit von dem Identifikationssignal durch eine vorübergehende lokale Einbringung von Wärme an mindestens einer Schaltstelle der Verzweigung zur kurzzeitigen Reduzierung der Viskosität des Fluides an der Schaltstelle umfasst, so dass ein mittels der mindestens einen Detektionseinheit detektiertes Mikropartikel den vom Identifikationssignal vorgegebenen Ausgang passiert.

Eine Identifizierung von Mikropartikeln in einem Fluid ist unter anderem in der medizinischen Diagnostik erforderlich. Beispielsweise in der konventionellen Sepsisdiagnostik wird bei einem Anfangsverdacht dem Patienten Blut entnommen. Da keine Kenntnis des Erregertypus vorliegt, kann der Patient in dieser Phase nur mit einem Breitband-Antibiotikum behandelt werden, dessen Wirksamkeit beschränkt ist oder das im ungünstigsten Fall gar keine Wirkung ausübt.

Blutkulturen werden angelegt und in einer Zeitspanne von 24 Stunden findet eine Erregerselektion und -vermehrung statt. Mit visueller Mikroskopie der vermehrten Erreger wird ein Befund erstellt. In einem anschließenden Diffusionstest wird das antibiotische Wirkprofil ermittelt, das nach ca. 48 Stunden vorliegt. Erst nachdem die Erreger und ihre Sensitivität gegen verschiedene Antibiotika ermittelt sind, kann eine spezifische Antibiotikatherapie eingeleitet werden. Häufig erfolgt der wirksame Einsatz dieser Therapeutika zu spät, so dass eine hohe Mortalität die Folge ist.

Eine eingangs genannte Vorrichtung ist aus der DE 198 47 952 C2 bekannt. Dort wird ein elektrokalorischer Fluidschalter beschrieben, bei dem elektrische Widerstandsheizer die Flüssigkeit in vordefinierten Leitungsabschnitten erwärmen. Dazu ist ein enger thermischer Kontakt der Widerstandsheizer zum Fluidkanal erforderlich, so dass die Wärme über eine Wandung des Fluidkanals zur Flüssigkeit gelangt. Folglich wird die Wandung stets erwärmt, so dass eine intrinsische Wärmekapazität aufgeladen wird und nur mittelbar ein Flüssigkeitselement. Um die Arbeitsgeschwindigkeit zu erhöhen, ist daher die Wandung aus einem Material mit hoher Temperaturleitfähigkeit hergestellt und es sind thermische Isolationszonen in Form von Ausnehmungen im Bereich der Widerstandsheizer ausgebildet. Als erreichbare Schaltfrequenz sind 5 Hz genannt.

Aus der US 2004/0022685 A1 ist eine Vorrichtung mit den Merkmalen des Oberbegriffs des Anspruchs 1 bekannt. Darin ist ein Durchfluss-Zytometer offenbart, dessen Funktionsweise darauf beruht, dass die Viskosität einer Pufferlösung gezielt durch Erwärmung mittels Laserstrahlung verändert wird und dadurch eine zuvor detektierte Zelle in einen gewünschten Ausgang gelenkt wird. Jeder Strom eines Probenfluids bewegt sich, auf beiden Seiten flankiert von Pufferlösung, durch einen Kanal, der sich am Ende in zwei Ausgänge teilt, von denen einer etwas breiter als der andere ist, so dass die Zellen des Probenfluids normalerweise in den einen Ausgang fließen und nur, wenn die Viskosität der den anderen Ausgang passierenden Pufferlösung durch Einwirkung eines Laserstrahls erhöht wird, der Strom des Probenfluids in diesen anderen Ausgang gelenkt wird. Es ist auch erwähnt, dass der Ausgang an der Stelle, an der die Laserstrahlung auf den Ausgang trifft, verengt sein kann, um ihn an den Durchmesser des Laserstrahls anzupassen, wodurch eine effektive Erwärmung der Flüssigkeit erreicht werden soll.

Es ist die Aufgabe der vorliegenden Erfindung, eine Vorrichtung zum Sortieren von Mikropartikeln in einem Fluidstrom bereitzustellen, die besonders effektiv arbeitet.

Diese Aufgabe wird erfindungsgemäß durch eine Vorrichtung mit den Merkmalen des Patentanspruchs 1 gelöst. Vorteilhafte Ausgestaltungen der Erfindung sind in den abhängigen Patentansprüchen angegeben oder lassen sich aus der nachfolgenden Beschreibung entnehmen.

Das Funktionsprinzip einer mikrofluidischen Schaltung besteht darin, einzelne durch ein Fluid getragene Mikropartikel im einfachsten Fall einer fluidischen Verzweigung zuzuführen, die einen Eingangskanal und zwei Ausgangskanäle aufweist sowie Wandungen, die zumindest abschnittsweise für elektromagnetische Strahlung - insbesondere optische Strahlung mit Wellenlängen im Bereich von 100 nm bis 10 µm - transparent sind. Über den Eingangskanal strömt das die Mikropartikel tragende Fluid in die Verzweigungsstelle hinein, über die Ausgangskanäle verlässt das Fluid die Verzweigungsstelle. Der Verzweigung kommt die Aufgabe zu, ein detektiertes Mikropartikel in Abhängigkeit von seinem bestimmten Typus in einen von mindestens zwei Ausgangskanälen auszuschleusen.

In Erweiterung dieses Falles bezieht sich die Lösung auf eine (n, m)-Verzweigung mit n Eingangskanälen und m Ausgangskanälen. Mindestens einer der n Eingangskanäle führt das Fluid mit den zu sortierenden Mikropartikeln, auch als Analytlösung bezeichnet, die anderen Eingangskanäle, die keine Analytlösung enthalten, führen Hilfsströme mit einem Fluid ohne nachzuweisende Mikropartikel. Dieses Fluid wird auch als Pufferlösung bezeichnet. Die Zahl der Ausgangskanäle beträgt mindestens zwei, in die das Mikropartikel ausgeschleust werden kann.

Um die Schaltfunktion der fluidischen Verzweigung zu unterstützen, weist mindestens ein Ausgangskanal vorzugsweise eine Engstelle an seiner Schaltstelle auf, welche einen erhöhten hydrodynamischen Widerstand hervorruft. Im Falle von zwei Ausgangskanälen entspricht das Verhältnis der Flüsse in den beiden Ausgangskanälen dem Verhältnis der reziproken Widerstände der beiden Ausgangskanäle. Wird die Engstelle im Ausgangskanal mit einer Schaltstrahlung beaufschlagt, deren Wellenlänge so gewählt ist, dass ein Teil der Strahlung im Fluid absorbiert wird, so entsteht eine lokale transiente Erwärmung des Fluids in der Engstelle. Durch die Erwärmung reduziert sich die Viskosität des Fluids in der Engstelle, so dass der hydrodynamische Widerstand in der Engstelle abnimmt. Dadurch nimmt der Volumenstrom durch den Ausgangskanal mit der erwärmten Engstelle zu und der Volumenstrom durch den nicht erwärmten Ausgangskanal nimmt ab.

Liegt in beiden Ausgangskanälen der gleiche hydrodynamische Widerstand vor und ist die Verzweigung so ausgelegt, dass der Fluss symmetrisch aufgeteilt wird, so sind die Ströme des Fluids in beiden Ausgangskanälen gleich, wenn keine Schaltstrahlung beaufschlagt wird. Durch die Schaltstrahlung, die auf einen der beiden Ausgangskanäle einwirkt, ändern sich die Flussverhältnisse und damit der Verlauf der Flusslinien, die das zu sortierende Mikropartikel in den gewünschten Ausgangskanal - derjenige dessen hydrodynamischer Widerstand transient herabgesetzt wird - führen. Ein aus dem Eingangskanal austretendes Mikropartikel kann somit durch Steuern der Volumenströme in den Ausgangskanälen mit Hilfe elektromagnetischer Strahlung in den bestrahlten Ausgangskanal geführt werden.

Um die Schaltwirkung zu verstärken, besteht der Eingangskanal mindestens aus drei nebeneinander laufenden Kanälen. Der innere Kanal führt das die Mikropartikel enthaltende Fluid, im Folgenden Analytlösung, genannt, die beiden äußeren Kanäle führen ein Fluid, das keine Mikropartikel enthält, im Folgenden Pufferlösung genannt. Die Pufferlösung hat die Aufgabe die Schaltwirkung zu verstärken. Dies ist insbesondere dann der Fall, wenn die Volumenströme der Pufferlösung stärker sind als der Volumenstrom der Analytlösung. Ein Umleiten eines der Pufferströme führt dann dazu, dass der Analytstrom mitgeführt und vollständig in einen der beiden Ausgangskanäle gesteuert wird. Die Schaltwirkung kann dabei wie in dem zuvor beschriebenen einfachen, nicht zur Erfindung gehörenden, Fall eines einzelnen Eingangskanals durch Bestrahlen des Fluids mit der Schaltstrahlung an der Schaltstelle eines der beiden Ausgangskanäle erfolgen. Die Schaltwirkung kann auch dadurch verstärkt werden, dass Schaltstellen an den beiden Eingangskanälen mit den Pufferströmen eingebracht werden. Das Beaufschlagen der Schaltstrahlung an der Schaltstelle des Eingangskanals, der dem gewünschten Ausgangskanal diametral gegenüberliegt, führt zum Umlenken des Analytstroms in den gewünschten Ausgangskanal. Zusätzlich kann die Schaltstrahlung an der Schaltstelle des gewünschten Ausgangskanals beaufschlagt werden. Wird die Schaltstrahlung gleichzeitig sowohl an der Schaltstelle des Eingangskanals der Pufferlösung als auch an der gegenüberliegenden Schaltstelle des Ausgangskanals beaufschlagt, so verstärkt sich die Schaltwirkung.

Erfindungsgemäß wird durch eine mäanderförmige Faltung des Kanalverlaufs an der Engstelle erreicht, dass zumindest der überwiegende Teil der zum Schalten eingestrahlten elektromagnetischen Strahlung im Fluid absorbiert wird.

Um den Schalthub zu erhöhen, wird die Geometrie einer durch Verringerung des Querschnitts erzeugten Engstelle vorzugsweise so ausgelegt, dass sie an die Verteilung der Schaltstrahlung senkrecht zu deren Propagationsrichtung und an die Absorptionslänge der Schaltstrahlung angepasst ist, wobei als Absorptionslänge die Strecke verstanden werden soll, nach der die einfallende Strahlung bis auf einen Rest von 1/e absorbiert worden ist. In einem Ausführungsbeispiel wird die Engstelle so ausgestaltet, dass durch die verringerte Querschnittsfläche des Kanals ein ausreichender hydrodynamischer Widerstand für ein günstiges Schaltverhalten gewährleistet ist und andererseits die Kanaltiefe, entlang derer sich die Schaltstrahlung ausbreitet, an die Absorptionslänge der Schaltstrahlung angepasst ist. Damit die Engstelle an die Verteilung der Schaltstrahlung in einer Ebene senkrecht zur Ausbreitungsrichtung der Schaltstrahlung angepasst ist, kann der Verlauf des Kanals an der Engstelle so gefaltet werden, dass der Überlapp der Strahlungsverteilung und der Querschnittsflächen des Fluidkanals im Bereich der Engstelle möglichst groß ist. Dabei erfolgt die mäanderförmige Faltung so, dass die mäandrierenden Kanäle in Bezug auf die Propagationsrichtung der Schaltstrahlung nebeneinander oder hintereinander liegen. Wird die Ausdehnung des Engstellenbereichs so gewählt, dass ein möglichst großer Überlapp mit der Strahlungsverteilung vorliegt und ein großer hydrodynamischer Widerstand durch die geringe Höhe des Kanals in diesem Bereich entsteht, so kann die Schaltwirkung weiter verstärkt werden, indem mehrere Ebenen des fluidischen Kanals mit jeweils mäandrierendem Kanalverlauf in Propagationsrichtung der Schaltstrahlung hintereinanderliegen und so von dieser gleichzeitig bestrahlt werden. Idealerweise werden mehrere Ebenen mäandrierender Kanalverläufe hintereinandergelegt, so dass die Energie der Schaltstrahlung gänzlich im Fluid absorbiert wird.

Mit der beschriebenen Vorrichtung ist es möglich, monolithische mikrofluidische Strukturen für die Identifikation, Sortierung und Charakterisierung von Mikropartikeln einzusetzen. Eine solche Mikrofluidik besteht aus einem einzigen Material, das für elektromagnetische Strahlung transparent ist, wie beispielsweise Quarzglas. Es besteht keine Einschränkung bei der Auswahl des Materials dahingehend, dass auf eine hohe Wärmeleitfähigkeit geachtet werden muss. Ebenso kann auf thermische Isolationszonen und die zu deren Herstellung erforderlichen Arbeitsschritte verzichtet werden.

Die Erfindung stellt ein Verfahren und eine Vorrichtung für die Identifikation, Sortierung und Charakterisierung von Mikropartikeln in einem Fluid, wie z.B. biologischen Zellen oder Krankheitserregern, zur Verfügung, so dass eine spezifische Verabreichung eines pharmakologischen Wirkstoffs oder die Einleitung anderer Gegenmaßnahmen erfolgen kann. Im Falle von Schadstoffen oder Erregern in Gewässern oder Trinkwasser können mit den Informationen aus der Diagnostik schnell Maßnahmen eingeleitet werden, um eine gesundheitsgefährdende Aufnahme und weitere Ausbreitung der Schadstoffe und Erreger zu vermeiden. Die Mikropartikel können dabei stets in einer physiologischen oder wässrigen Lösung geführt werden, die so gewählt ist, dass die Vitalität organischer Mikropartikel, wie Zellen oder Erreger, bei den Identifikations-, Sortier- und Charakterisierungsvorgängen stets erhalten bleibt.

Unter dem Begriff Fluid soll allgemein eine fließfähige Flüssigkeit verstanden werden, wie z.B. Blut, Blutserum, Blutextrakte, wässrige Lösungen, organische Lösungen, Öl, Emulsionen von mindestens zwei sich nicht mischenden Phasen, wie z.B. Öl und Wasser sowie Wasser. Unter dem Begriff Mikropartikel sollen anorganische oder organische Objekte verstanden werden, deren typische Abmessungen - wie z.B. der Durchmesser oder die Länge - im Bereich von 0,1 µm bis 500 µm liegen. Solche Partikel sind beispielsweise Mikrobeads, Öltröpfchen mit darin aufgenommenen Substanzen, Emulsionen zweier sich nicht mischender Flüssigkeiten, wie beispielsweise Wasser-in-ÖI-Emulsionen oder Öl-in-Wasser-Emulsionen, Gelkügelchen, mikroskopische Kunststoffpartikel, Krankheitserreger, wie beispielsweise Pilze oder Bakterien, biologische Zellen. Insbesondere die Krankheitserreger und biologischen Zellen, z.B. Krebszellen, sind für die beschleunigte Diagnostik von besonderem Interesse, da sie eine pathogene Wirkung auslösen können. Diese Partikel befinden sich u.a. im Blut und können in dieser Umgebung im Organismus Krankheiten auslösen.

Auf der Eingangsseite der fluidischen Verzweigung befindet sich mindestens eine Detektionseinheit, die vorzugsweise mit Hilfe elektromagnetischer Strahlung einer bestimmten Wellenlänge sowohl das Vorbeikommen eines Mikropartikels zeitaufgelöst detektiert als auch über die Eigenschaften der am Partikel gestreuten elektromagnetischen Strahlung oder der am Partikel durch elektromagnetische Strahlung angeregten Fluoreszenzstrahlung - wie beispielsweise das Spektrum, das Zeitverhalten, die Polarisation, die Emissionsrichtung, die Phasenbeziehung zu einem Referenzstrahl - den Typ des Mikropartikels bestimmt. Diese Strahlung wird im folgenden Anregungsstrahlung genannt. Der Einstrahlungsbereich der Anregungsstrahlung wird Detektionsbereich genannt. Handelt es sich bei der Anregungsstrahlung um einen kollimierten Strahl so wird dieser nachfolgend als Anregungsstrahl bezeichnet. Die elektromagnetische Anregungsstrahlung ist insbesondere optische Strahlung mit Wellenlängen zwischen 300 nm und 700 nm, wie sie z.B. zur Anregung der Fluoreszenz von Farbstoffen eingesetzt wird.

Die Mikropartikel sind z.B. spezifisch mit Fluoreszenzfarbstoffen markiert oder weisen aufgrund ihrer chemischen, biologischen, physikalischen Zusammensetzung und Konformation eine vergleichbare spezifische Wechselwirkung mit elektromagnetischer Strahlung auf, die ihre Zuordnung zu einem bestimmten Typus des Mikropartikels erlaubt.

Passieren diese markierten oder intrinsisch spezifisch wechselwirkenden Mikropartikel den Detektionsbereich, so treffen sie auf die Anregungsstrahlung und lösen ein Signal aus, das für die Steuerung der fluidischen Verzweigung mit Hilfe einer weiteren elektromagnetischen Strahlung, im Folgenden Schaltstrahlung genannt, verwendet wird. Zur Steuerung wird das Fluid an der fluidischen Verzweigung ausgangsseitig mit der Schaltstrahlung, die vorzugsweise ebenfalls eine optische Strahlung im Bereich von 100 nm bis 10 µm ist, beaufschlagt, so dass das Verhältnis der Ausgangsströme in den beiden Ausgangskanälen so geändert wird, dass die Flusslinien des Fluids das detektierte und identifizierte Mikropartikel in den gewünschten Ausgangskanal führen. Die Stellen der Verzweigung, die dafür vorgesehen sind, die Schaltstrahlung zu empfangen, werden im Folgenden Schaltstellen genannt.

Zeitlich erfolgt die Einwirkung der Schaltstrahlung auf das Verhältnis der Ausgangsströme der fluidischen Verzweigung nach der Detektion des Mikropartikels in einer Zeitspanne, die sich an der Transitzeit des Mikropartikels zwischen dem Detektionsort und dem Ort der veränderten Flusslinien orientiert, so dass das Mikropartikel sicher in einen zuvor bestimmten Ausgangskanal gelangt.

Die elektromagnetische Schaltstrahlung ist in ihrer Wellenlänge und in ihrer örtlichen Strahlführung so gewählt, dass sie möglichst effizient vom Fluid absorbiert wird. Beispielsweise ist die Wandung der Schaltstelle eines Ausgangskanals der fluidischen Verzweigung für diese Strahlung transparent, während ihre Absorptionslänge im Fluid in der Größenordnung der Durchstrahlungslänge im Fluid an der Schaltstelle gewählt ist. Mit Durchstrahlungslänge im Fluid ist die Länge des Weges gemeint, den die elektromagnetische Strahlung im Fluid nimmt. Auf diese Weise wird mit der Schaltstrahlung lokal eine geringe Wärmemenge in das Fluid eingebracht, so dass dieses in transienter Weise seine Strömungseigenschaften ändert. Insbesondere führt die Einbringung der Wärmemenge zu einer lokalen transienten Verminderung der Viskosität des Fluids. Die verringerte Viskosität hat einen lokal verringerten Strömungswiderstand des Ausgangskanals zur Folge. Auf diese Weise ändert sich das Verhältnis der Ströme in den beiden Ausgangskanälen und mithin der Verlauf der Flusslinien in der fluidischen Verzweigung. Auf diese Weise wird das mitgeführte Mikropartikel in den gewünschten Ausgangskanal geschleust.

Dieser Vorgang kann auch als getriggerter Schaltprozess beschrieben werden, wobei die eingangsseitige Detektion des Mikropartikels zeitverzögert den Schaltvorgang triggert im Sinne der Ausschleusung des Partikels in den gewünschten Ausgangskanal.

Die Einschaltdauer der Schaltstrahlung liegt im Intervall von 10 µs bis 1 s und insbesondere im Bereich zwischen 100 µs und 200 ms.

Als elektromagnetische Schaltstrahlung kommt insbesondere optische Strahlung in Frage mit Wellenlängen zwischen 70 nm und 30 µm. Ist das Fluid eine wässrige Lösung, so sind insbesondere Wellenlängen zwischen 100 nm und 200 nm - UV-Spektralbereich - sowie zwischen 900 nm und 3 µm im Infraroten zu wählen. Dabei werden Absorptionskoeffizienten im Wasser zwischen 10 m⁻¹ bis 10⁶ m⁻¹ erreicht. Durch Wahl der Wellenlänge der Schaltstrahlung im Infrarotbereich sind insbesondere Absorptionslängen von 1 µm bis 1000 µm erreichbar; diese liegen somit in der Größenordnung der Querabmessungen von Fluidkanälen in der Durchstrahlungsrichtung.

In einem weiteren Ausführungsbeispiel kann eine Verzweigung so gestaltet sein, dass sie eine beliebige Anzahl von n Eingangskanälen und m Ausgangskanälen enthält. Dabei fließt in einem bestimmten Ausführungsbeispiel in der Mitte ein Analytkanal, darauf folgen auf jeder Seite des mittleren Kanals eine Serie von gleich vielen Kanälen, wobei diese eine beliebige Abfolge von Kanälen mit Analytlösung und Pufferlösung aufweisen können mit der Einschränkung, dass die beiden äußersten Kanäle eine Pufferlösung tragen. Diejenigen Eingangskanäle, welche eine Schaltwirkung hervorrufen sollen, weisen mindestens eine Schaltstelle auf, die für die Schaltstrahlung zugänglich ist. Diejenigen Kanäle, die eine Analytlösung mit Mikropartikeln führen, weisen mindestens einen Detektionsbereich für die Anregungsstrahlung auf. Jeder Detektionsbereich wird mit Anregungsstrahlung mindestens einer bestimmten Wellenlänge bestrahlt, um das Mikropartikel zu detektieren und zu identifizieren. Jeder Detektionsbereich ist mit mindestens einer Detektionseinheit versehen, welche die an dem Partikel rückgestreute Strahlung aufnimmt und auswertet.

In den m Auslasskanälen befindet sich jeweils mindestens eine Schaltstelle, die für die elektromagnetische Schaltstrahlung zugänglich ist. Für eine Schaltstelle wird elektromagnetische Strahlung mindestens einer bestimmten Wellenlänge eingesetzt.

In einem weiteren Ausführungsbeispiel ist die fluidische Verzweigung so ausgeführt, dass der dreiteilige Einlasskanal ersetzt wird durch einen zweiteiligen Kanalaufbau, bei dem der innere Kanal von dem äußeren vollständig umschlossen wird. Im einfachsten Falle wird eine solche Anordnung durch zwei konzentrische rotationssymmetrische Kanäle erzeugt. Dabei führt der äußere die Pufferlösung und der innere die Analytlösung. Bei Eintritt in die Verzweigungsstelle wird dann der innere Strom der Analytlösung in den äußeren Strom der Pufferlösung injiziert. Das Fluid wird am Ende der Verzweigungsstelle in zwei Ausgangskanäle aufgetrennt, wobei wieder jeder Ausgangskanal mindestens eine Schaltstelle aufweist, die für die Schaltstrahlung zugänglich ist. In einer Abwandlung dieses Ausführungsbeispiels kann der äußere Pufferstrom auch in zwei Segmente unterteilt werden. Dabei sind die beiden Segmente so gewählt, dass sie zusammen den Analytstrom umschließen. Jedes Segment besitzt einen separaten Zulaufkanal mit jeweils mindestens einer für die elektromagnetische Schaltstrahlung zugänglichen Schaltstelle.

In einem weiteren Ausführungsbeispiel kann der Pufferstrom im Eingangskanal in *n* Segmente mit n Zulaufkanälen aufgeteilt sein, die den Analytkanal umschließen. Jeder dieser Zuläufe weist wieder mindestens eine Schaltstelle zur Beaufschlagung mit Schaltstrahlung auf. An der Verzweigungsstelle können sich die n Eingangskanäle auf m Ausgangskanäle aufteilen, wobei jeder Ausgangskanal mindestens eine Schaltstelle aufweist. Dabei sind in einem Ausführungsbeispiel die Ausgangskanäle so angeordnet, dass ihre Anordnung derjenigen der Segmente des Eingangskanals entspricht und die Schaltstellen im Eingangs- und Ausgangskanal so gewählt werden, dass ein zu sortierendes Mikropartikel im Analytkanal in jeden Ausgangskanal gesteuert werden kann.

In einem weiteren Ausführungsbeispiel können die Schaltstellen und die Kanalabschnitte in der Nähe der Schaltstellen von Kanälen umgeben sein, die ein Fluid transportieren, das die Schaltstellen und deren Umgebung schnell abkühlt. Dadurch wird die Schaltzeit beim Schalten des Flüssigkeitsstroms an der fluidischen Verzweigung verkürzt. Das kühlende Fluid kann auch dazu verwendet werden, die Viskosität vor dem Schaltvorgang durch Abkühlen des Fluids möglichst stark zu erhöhen und dadurch mit der Schaltstrahlung eine stärkere Schaltwirkung hervorzurufen.

Zur Erhöhung des Schalthubs - hier verstanden als der Grad der Änderung der Flusslinien oder der Grad der Änderung des Verhältnisses der Ausgangsströme - kann im Bereich der Wechselwirkungszone der elektromagnetischen Schaltstrahlung die Viskosität durch Kühlen des Fluids an dieser Stelle erhöht werden. Dadurch wird an der Schaltstelle ein hoher hydrodynamischer Widerstand erzeugt. Die Änderung des hydrodynamischen Widerstandes und damit der Schalthub ist umso größer, je größer die Temperaturerhöhung und damit die Viskositätserniedrigung ist.

Nach Abschalten der elektromagnetischen Schaltstrahlung nimmt das Fluid im Bereich einer Engstelle der Verzweigung wieder die Temperatur der umgebenden Wandungen und der nachströmenden Flüssigkeit an, so dass die Verzweigung wieder zum initialen Verhältnis der Ströme der betrachteten Ausgangskanäle zurückkehrt.

Weitere Vorteile, Merkmale und Einzelheiten der Erfindung ergeben sich aus der nachfolgenden Beschreibung bevorzugter Ausführungsbeispiele sowie anhand der Zeichnungen.

Es zeigen:
Figur 1 eine schematische Schnittansicht einer fluidischen Verzweigung;
Figur 2 eine schematische Schnittansicht einer Verknüpfung mehrerer fluidischer Verzweigungen;
Figur 3 eine schematische Schnittansicht einer unsymmetrisch ausgebildeten fluidischen Verzweigung;
Figur 4 eine Detailansicht einer besonders ausgestalteten Engstelle in einem Fluidkanal; und
Figur 5 eine Detailansicht einer alternativ ausgestalteten Engstelle in einem Fluidkanal.

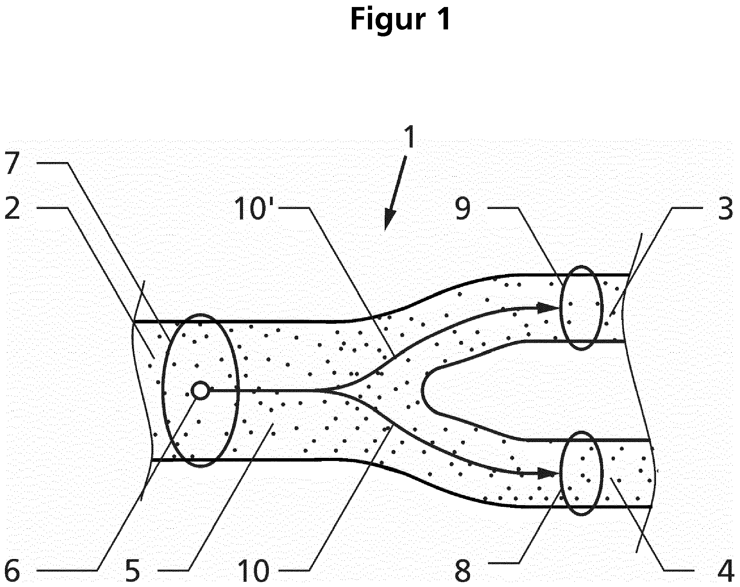

Figur 1 zeigt den einfachsten Fall einer fluidischen Verzweigung mit einem Eingangskanal 2 und zwei Ausgangskanälen 3, 4. Die fluidische Verzweigung wird von einem Fluid 5 durchströmt. Über den Eingangskanal 2 gelangt das Fluid mit den zu detektierenden und zu sortierenden Mikropartikeln 6 in das Schaltelement 1. Im Falle einer symmetrischen Anordnung der Ausgangskanäle 3, 4 mit gleichem Strömungsquerschnitt und gleichartiger Gestaltung, teilt sich der Eingangsfluss im Mittel in zwei gleich große Ausgangsströme auf.

Im Bereich 7 wird eine elektromagnetische Anregungsstrahlung auf den Eingangskanal 2 eingestrahlt, um ein vorbeikommendes Mikropartikel 6 zu detektieren. Diese Detektion erfolgt mit an sich bekannten Methoden, wie z.B. der Anregung einer Fluoreszenz oder der Erzeugung eines spezifischen Streulichtsignals. An den Orten 8 oder 9 im Bereich der Austrittskanäle kann eine elektromagnetische Schaltstrahlung beaufschlagt werden.

Wird ein Mikropartikel 6 am Ort 7 detektiert und identifiziert, das z.B. in den Kanal 4 ausgeschleust werden soll, so wird die elektromagnetische Schaltstrahlung am Ort 8 aktiviert, um dort lokal den Strömungswiderstand des Fluids durch eine vorübergehende Absenkung der Viskosität des Fluids zu verringern. Auf diese Weise ändert sich in kurzer Zeit das Verhältnis der Ausgangsströme in den Kanälen 3 und 4 derart, dass der Stromanteil des Kanals 4 vergrößert wird. Damit einhergehend ändert sich der Verlauf der Flusslinien des Fluids in der gezeigten Verzweigung und das Mikropartikel 6 folgt der Trajektorie 10 und gelangt in den Ausgangskanal 4. In entsprechender Weise ist eine Ausschleusung in den Kanal 3 möglich, wenn die elektromagnetische Schaltstrahlung im Bereich 9 beaufschlagt wird. Das Mikropartikel 6 folgt dann der Trajektorie 10'.

Insgesamt erlaubt das gezeigte fluidische Schaltelement eine Detektion, Identifikation und Sortierung von Mikropartikeln, die vom Fluid getragen werden. Durch eine Hintereinanderschaltung mehrerer schaltbarer fluidischer Verzweigungen kann eine Detektions-, Identifikations- und Sortierstruktur aufgebaut werden, die es erlaubt, ein Gemisch von Mikropartikeln - z.B. eine Gruppe verschiedener Erreger - in einzelne Sortierfraktionen auszuschleusen und diese dort weiter zu charakterisieren oder zu behandeln.

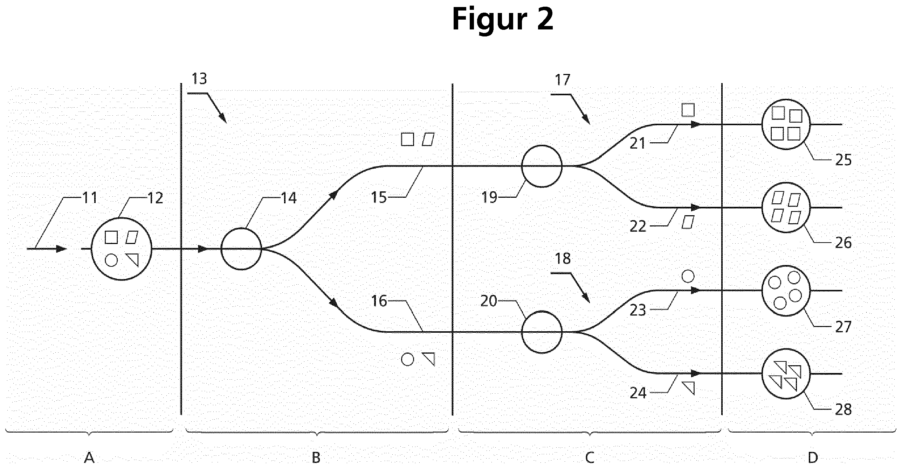

Figur 2 zeigt beispielhaft eine solche Verkettung schaltbarer fluidischer Verzweigungen B und C, die als Mikrofluidik ausgeführt sind und in einer Prozesskette bestehend aus den Abschnitten A, B, C und D integriert sind. Über den Eingangsstrom 11 gelangt ein Fluid mit einem Gemisch von Mikropartikeln, z.B. spezifisch markierten Erregern, in den Abschnitt A. Das in einem Kompartiment 12 vorliegende Gemisch wird als mikrofluidischer Strom mit vereinzelten Mikropartikeln der nächsten Stufe B zugeführt. Dort wird das Fluid mit den markierten Partikeln auf ein erstes Schaltelement 13 geführt, in dem über die Anregungsstrahlung im Bereich 14 die Mikropartikel detektiert und identifiziert werden. Ausgehend von dieser Information wird in der beschriebenen Weise ein Schaltvorgang ausgelöst, der das Partikel in einen der beiden Ausgangskanäle 15 oder 16 führt. In Figur 2 sind zur Vereinfachung die Einwirkbereiche der elektromagnetischen Schaltstrahlung zur Auslösung des Schaltvorgangs nicht dargestellt.

Über die Ausgangskanäle 15 und 16 gelangt das Fluid in den nächsten Abschnitt C, in dem sich weitere schaltbare fluidische Verzweigungen 17 und 18 befinden. In analoger Weise wie für den Abschnitt B beschrieben, können in diesem Abschnitt die Mikropartikel weiter sortiert werden. Dazu sind entsprechende Einwirkbereiche der Anregungsstrahlung 19 und 20 für jede schaltbare Verzweigung 17 und 18 vorhanden. Den im gezeigten Beispiel insgesamt vier Ausgangskanälen 21, 22, 23 und 24 des Abschnitts C sind nun jeweils spezifische Mikropartikel zugeordnet, wie dies schematisch in Figur 2 durch die Symbole Quadrat, Parallelogramm, Kreis und Rechteck veranschaulicht ist.

In einer Erweiterung des Beispiels von Figur 2 können weitere fluidische Verzweigungen für die Detektion, Identifikation- und Sortierung von Mikropartikeln angeordnet werden bis eine gewünschte Anzahl von Sortierfraktionen erzielt wird.

In Figur 2 gelangen schließlich vier Sortierfraktionen 21, 22, 23, 24 zum Abschnitt D wo diese jeweils in Kompartimenten 25, 26, 27 und 28 gesammelt werden und weiteren Untersuchungen zugänglich gemacht werden. Insbesondere im Falle von lebenden Organismen, wie Zellen und Erregern, sind weiterführende Untersuchungen unter Vitalbedingungen möglich. Dazu gehören z.B. Kultivierungsschritte, mikroskopische Untersuchungen, Untersuchungen von Wechselwirkungen mit Medikamenten, wie z.B. antibiotischen Resistenzprofilen.

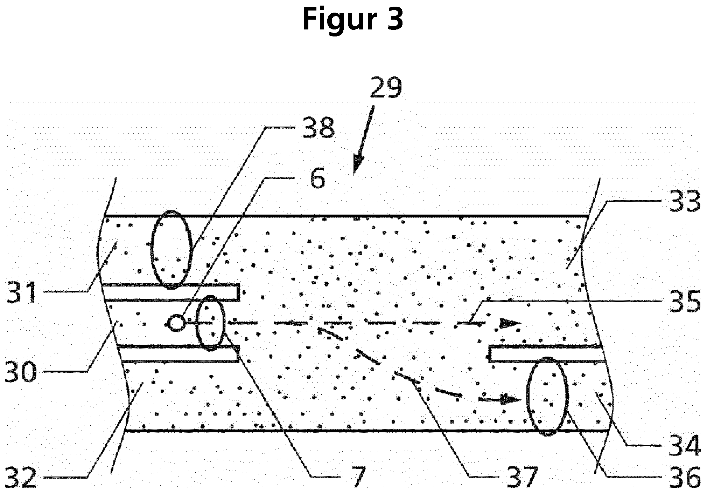

Figur 3 zeigt eine Variante der schaltbaren fluidischen Verzweigung 29 mit drei Eingangskanälen und 2 Ausgangskanälen. Über den Eingangskanal 30 gelangt das Mikropartikel 6 in die Verzweigung 29. Die Eingangskanäle 31 und 32 führen eine Pufferlösung, die die Analytlösung, das ist der Flüssigkeitsstrom im Kanal 30, flankiert. Die beiden Ausgangskanäle 33, 34 sind unsymmetrisch angeordnet, so dass im nicht-aktivierten Zustand der Verzweigung der Ausgangsstrom im Kanal 33 größer ist als derjenige im Kanal 34. Das Mikropartikel 6 folgt in diesem Fall der Trajektorie 35 und gelangt in den Ausgangskanal 33.

Soll das Partikel in den Kanal 34 ausgeschleust werden, so wird die elektromagnetische Schaltstrahlung im Bereich 36 in der beschriebenen Weise beaufschlagt, so dass das Mikropartikel 6 entlang der Trajektorie 37 in den Ausgangskanal 34 geführt wird. Zur Verstärkung des Schalthubs wird die Schaltstrahlung zusätzlich im Bereich 38 des Eingangskanals 31 eingestrahlt, so dass in der Wirkung der Strömungswiderstand sowohl im Kanal 31 als auch im Kanal 34 vorübergehend herabgesetzt wird und dadurch eine größere Verschiebung der Flusslinien erzeugt wird, um das Mikropartikel sicher entlang der Trajektorie 37 in den Ausgangskanal 34 zu führen.

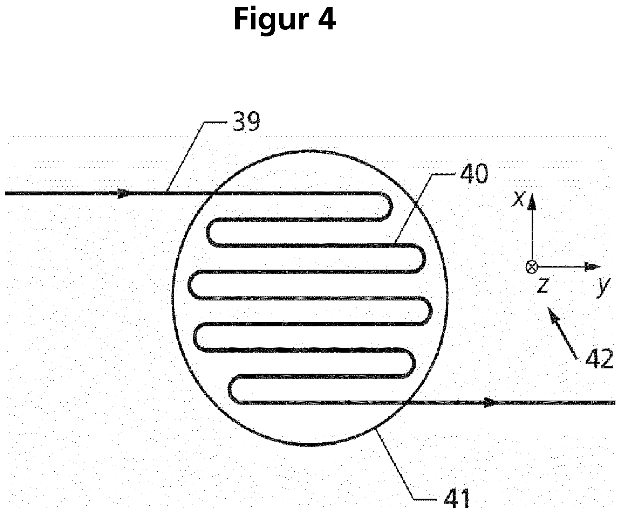

Figur 4 zeigt ein Ausführungsbeispiel eines Details eines Ausgangskanals mit einer Engstelle mit mäandrierendem Verlauf 40 des Fluidkanals. Der Einwirkbereich der Schaltstrahlung 41 umschließt diese Engstelle mit den Fluidmäandern und daher kann die Energie der Schaltstrahlung effizient in die strömende Flüssigkeit eingekoppelt werden, um den Strömungswiderstand abzusenken. Das Koordinatensystem 42 zeigt die z-Richtung in der die Propagation der Schaltstrahlung 41 erfolgt. Das Fluid strömt im Ausgangskanal 39 in die Mäanderstruktur 40 und wechselwirkt dort mit der Schaltstrahlung 41. Wie bereits oben beschrieben, sind solche Strukturen gleichermaßen auch in den nicht die Analytlösung führenden Eingangskanälen oder den anderen Ausgangskanälen vorhanden.

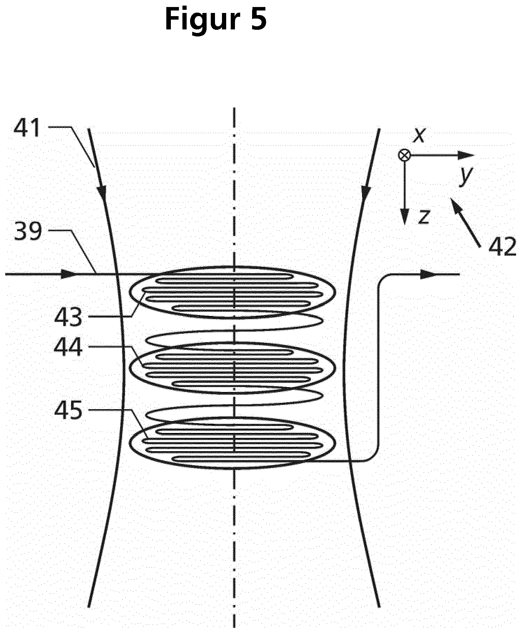

Figur 5 zeigt ein Ausführungsbeispiel einer Engstelle im Einwirkbereich der Schaltstrahlung 41. Der Fluidstrom 39 führt zu einer ersten Ebene mäandrierender Kanäle 43, die z.B. so ausgeführt ist, wie in Bild 4 gezeigt. Von dort wird der Mikrokanal weitergeführt zu einer zweiten und dritten Ebene mit jeweils mäandrierenden Kanälen 44, 45. In der bereits beschriebenen Weise wird so das Wechselwirkungsvolumen des Fluidstroms mit der Schaltstrahlung maximiert, um einen großen Schalthub zu erzeugen.

Die typischen Querabmessungen eines mikrofluidischen Transportkanals betragen zwischen 50 µm und 1 mm, z.B. wird ein Durchmesser von 400 µm eingesetzt. Typische Querabmessungen des Fluidkanals im Detektionsbereich 7 (Figuren 1 und 3) betragen zwischen 10 µm und 800 µm, insbesondere liegen diese zwischen 20 µm und 400 µm. Typische Querabmessungen im Bereich der Gabelung der Trajektorien - vgl. Figur 3, Trajektorien 35, 37 - liegen zwischen 50 µm und 1 mm, insbesondere zwischen 200 µm und 800 µm. Im Bereich der Einwirkzone der Schaltstrahlung, z.B. im Falle der Orientierung der mäanderartig geführten Kanäle in Ebenen parallel zur Propagationsrichtung der Schaltstrahlung, also senkrecht zu der in Figur 5 gezeigten Ausrichtung, beträgt die Kanalbreite (in diesem Fall in Propagationsrichtung der Schaltstrahlung) zwischen 10 µm und 400 µm, insbesondere liegt diese zwischen 10 µm und 50 µm. Die Kanaltiefe (im betrachteten Fall orientiert senkrecht zur Propagationsrichtung) liegt zwischen 50 µm und 500 µm, insbesondere zwischen 100 µm und 200 µm.

Die Anwendungsmöglichkeiten der beschriebenen Vorrichtung sind vielfältig. Eine davon ist das Sortieren artifizieller Partikel, wie Nano- oder Mikropartikel. Dabei ermöglichen sie die Clusterung der Partikel nach Größe und anderen Parametern, wie Fluoreszenz und bestimmten Eigenschaften. So wird die Herstellung von reinen Fraktionen dieser Partikel möglich.

Zu den Anwendungen aus dem medizinischen Bereich gehört die Identifikation und Separation von Bakterien, Pilzsporen und Hefezellen, wo eine schnelle Sepsisdetektion und ein schnelles Screening für therapeutische oder pharmazeutische Zwecke erreicht werden.

Ferner ermöglicht ein Einsatz der beschriebenen Vorrichtung zur Detektion und gegebenenfalls Identifikation und Separation von zirkulierenden Tumorzellen und anderen sogenannten rare cells die frühzeitige Identifikation von bestimmten lebensbedrohenden Erkrankungen, wie Krebs, und die Charakterisierung von bestimmten Zuständen dieser Krankheiten, z.B. der Grad der Proliferation.

Ein weiteres Anwendungsbeispiel stellen die Detektion und Separation von Stammzellen und differenzierten Stammzellen dar, wo das Screening von Stammzellen und differenzierten Stammzellen und so die Optimierung von Differenzierungsstrategien für Stammzellen für medizinische und pharmazeutische Zwecke ermöglicht werden.

## Patentansprüche

1. Vorrichtung zum Sortieren von Mikropartikeln (6) in einem Fluidstrom (5) mit mindestens einer Detektionseinheit zum Detektieren von einen Detektionsbereich (7) passierenden Mikropartikeln in dem Fluidstrom und zum Erzeugen eines Identifikationssignals;
einer Verzweigung mit mindestens einem Eingang (30, 31, 32) und mindestens zwei Ausgängen (33, 34), wobei mindestens ein Ausgang eine Schaltstelle (36) aufweist; und
einer Schalteinheit zum Schalten der Verzweigung in Abhängigkeit von dem Identifikationssignal durch eine vorübergehende lokale Einbringung von Wärme an mindestens einer Schaltstelle der Verzweigung zur kurzzeitigen Reduzierung der Viskosität des Fluides an der Schaltstelle, so dass ein mittels der mindestens einen Detektionseinheit detektiertes Mikropartikel den vom Identifikationssignal vorgegebenen Ausgang passiert;
**wobei**
die Schalteinheit dazu ausgebildet ist, die Wärme mittels elektromagnetischer Strahlung in das Fluid einzubringen;
die Verzweigung eine Wandung aufweist, die zumindest an den Schaltstellen (36, 38) für die elektromagnetische Strahlung transparent ist;
die Verzweigung mindestens einen Eingang (30) für den die Mikropartikel enthaltenden Fluidstrom und mindestens zwei den mindestens einen Eingang flankierende Eingänge (31, 32) für Hilfsfluidströme aufweist, wobei die Eingänge (31, 32) für die Hilfsfluidströme vorzugsweise Schaltstellen (38) aufweisen und die Hilfsfluidströme der Steuerung des Mikropartikel (6) enthaltenden Fluidstroms (5) dienen; und
die Eingänge (31, 32) für die Hilfsströme und/oder die Ausgänge (33, 34) der Verzweigung an den Schaltstellen (36, 38) einen Abschnitt mit verkleinertem Querschnitt aufweisen;
**dadurch gekennzeichnet, dass** die Abschnitte mit verkleinertem Querschnitt mäanderförmig in Falten gelegt sind, so dass zumindest der überwiegende Teil der zum Schalten eingestrahlten elektromagnetischen Strahlung im Fluid absorbiert wird.

2. Vorrichtung nach Anspruch1, **dadurch gekennzeichnet, dass** die Verzweigung monolithisch aufgebaut ist.

3. Vorrichtung nach Anspruch 1 oder 2, **dadurch gekennzeichnet, dass** die Abmessungen der Verzweigung an den Schaltstellen (36, 38) und die Absorptionslänge der elektromagnetischen Strahlung aufeinander abgestimmt sind, so dass die Absorptionslänge der elektromagnetischen Strahlung in der Größenordnung der von der Strahlung im zu erwärmenden Fluid zurückgelegten Wegstrecke liegt.

4. Vorrichtung nach einem der Ansprüche 1 bis 3, **dadurch gekennzeichnet, dass** die mindestens eine Detektionseinheit dazu ausgebildet ist, elektromagnetische Strahlung zur Anregung eines sich im Detektionsbereich (7) befindenden Mikropartikels (6) auszusenden und von dem Mikropartikel (6) ausgestrahlte oder rückgestreute elektromagnetische Strahlung zu empfangen und auszuwerten und ein einer Eigenschaft des Mikropartikels (6) zugeordnetes Identifikationssignal zu erzeugen; und die Wandung der Verzweigung zumindest im Detektionsbereich (7) für diese elektromagnetische Strahlung transparent ist.

5. Vorrichtung nach einem der Ansprüche 1 bis 4, **dadurch gekennzeichnet, dass** die Eingänge (31, 32) für die Hilfsströme und/oder die Ausgänge (33, 34) der Verzweigung im Bereich der Schaltstellen (36, 38) zumindest teilweise von Kanälen umgeben sind, die ein der Kühlung dienendes Fluid enthalten.

6. Vorrichtung nach einem der Ansprüche 1 bis 5, **dadurch gekennzeichnet, dass** der verkleinerte Querschnitt senkrecht zur Faltungsrichtung länglich ausgebildet ist, so dass sich eine Struktur ergibt, deren räumliche Anordnung und Ausdehnung an die Propagationsrichtung, die Absorptionslänge und den Strahlquerschnitt der zum Schalten eingestrahlten elektromagnetischen Strahlung (41) angepasst ist.

7. Vorrichtung nacheinem der Ansprüche 1 bis 5, **dadurch gekennzeichnet, dass** die Abschnitte mit verkleinertem Querschnitt mäanderförmig gefaltete Unterabschnitte (43, 44, 45) aufweisen, wobei mehrere solcher Unterabschnitte (43, 44, 45) nebeneinander oder übereinander angeordnet sind, so dass sich eine Struktur ergibt, deren räumliche Anordnung und Ausdehnung an die Propagationsrichtung, die Absorptionslänge und den Strahlquerschnitt der zum Schalten eingestrahlten elektromagnetischen Strahlung (41) angepasst ist.

8. Vorrichtung nach einem der Ansprüche 1 bis 7, **dadurch gekennzeichnet, dass** mehrere Verzweigungen (13, 17, 18) so miteinander verbunden sind, dass ein in eine eingangsseitig angeordnete Verzweigung eingespeistes Gemisch aus verschiedenartigen Mikropartikeln in Gruppen gleichartiger Mikropartikel sortiert werden kann.

9. Vorrichtung nach einem der Ansprüche 1 bis 7, **dadurch gekennzeichnet, dass** die Verzweigung unsymmetrisch ausgebildet ist, so dass in einem nicht-aktivierten Zustand der einen ersten Ausgang (33) passierende Fluidstrom größer ist als der einen zweiten Ausgang (34) passierende Fluidstrom und die Verzweigung nur dahingehend aktivierbar ist, ein von der Detektionseinheit detektiertes Mikropartikel in den zweiten Ausgang (34) zu schleusen.

10. Vorrichtung nach einem der Ansprüche 1 bis 8, **dadurch gekennzeichnet, dass** die Eingänge für die Hilfsfluidströme einen ringsektorförmigen Querschnitt aufweisen und den Eingang für den die Mikropartikel enthaltenden Fluidstrom zylindermantelförmig umgeben.

11. Vorrichtung nach Anspruch 10, **dadurch gekennzeichnet, dass** die Verzweigung einen zentralen Ausgang und mindestens zwei weitere Ausgänge mit ringsektorförmigem Querschnitt aufweist, die den zentralen Ausgang zylindermantelförmig umgeben, so dass ankommende Mikropartikel in einem nicht-aktivierten Zustand der Vorrichtung durch den zentralen Ausgang geführt werden.

## Claims

1. Device for sorting microparticles (6) in a fluid flow (5) with
at least one detection unit for detecting microparticles in the fluid flow that pass a detection area (7) and for generating an identification signal;
a branching with at least one inlet (30, 31, 32) and at least two outlets (33, 34), at least one outlet having a switching point (36); and
a switching unit for switching the branching in dependence on the identification signal by a temporary local introduction of heat at at least one switching point of the branching for briefly reducing the viscosity of the fluid at the switching point, so that a microparticle detected by means of the at least one detection unit passes the outlet specified by the identification signal;
wherein
the switching unit is designed to introduce the heat into the fluid by means of electromagnetic radiation; the branching has a wall that is transparent to the electromagnetic radiation, at least at the switching points (36, 38) ;
the branching has at least one inlet (30) for the fluid flow containing the microparticles and at least two inlets (31, 32) for auxiliary fluid flows, flanking the at least one inlet, the inlets (31, 32) for the auxiliary fluid flows preferably having switching points (38) and the auxiliary fluid flows serving for controlling the fluid flow (5) containing microparticles (6); and
the inlets (31, 32) for the auxiliary flows and/or the outlets (33, 34) of the branching have at the switching points (36, 38) a portion with a reduced cross section;
**characterized in that** the portions with a reduced cross section are laid in folds in a meandering manner, so that at least the predominant part of the electromagnetic radiation radiated in for the switching is absorbed in the fluid.

2. Device according to Claim 1, **characterized in that** the branching is monolithically constructed.

3. Device according to Claim 1 or 2, **characterized in that** the dimensions of the branching at the switching points (36, 38) and the absorption length of the electromagnetic radiation are made to match one another, so that the absorption length of the electromagnetic radiation is of the order of magnitude of the path covered by the radiation in the fluid to be heated.

4. Device according to one of Claims 1 to 3, **characterized in that** the at least one detection unit is designed to emit electromagnetic radiation for exciting a microparticle (6) located in the detection area (7) and to receive and evaluate electromagnetic radiation emitted or scattered back by the microparticle (6) and to generate an identification signal assigned to a property of the microparticle (6); and the wall of the branching is transparent to this electromagnetic radiation, at least in the detection area (7).

5. Device according to one of Claims 1 to 4, **characterized in that** the inlets (31, 32) for the auxiliary flows and/or the outlets (33, 34) of the branching in the region of the switching points (36, 38) are at least partially surrounded by channels that contain a fluid serving for cooling.

6. Device according to one of Claims 1 to 5, **characterized in that** the reduced cross section is formed as elongated perpendicularly to the direction of folding, so as to produce a structure of which the spatial arrangement and extent are adapted to the direction of propagation, the absorption length and the beam cross section of the electromagnetic radiation (41) radiated in for the switching.

7. Device according to one of Claims 1 to 5, **characterized in that** the portions with a reduced cross section have subportions (43, 44, 45) folded in a meandering manner, a number of such subportions (43, 44, 45) being arranged next to one another or one over the other, so as to produce a structure of which the spatial arrangement and extent are adapted to the direction of propagation, the absorption length and the beam cross section of the electromagnetic radiation (41) radiated in for the switching.

8. Device according to one of Claims 1 to 7, **characterized in that** a number of branches (13, 17, 18) are connected to one another in such a way that a mixture of various types of microparticles fed into a branching arranged on the inlet side can be sorted into groups of microparticles of the same type.

9. Device according to one of Claims 1 to 7, **characterized in that** the branching is formed unsymmetrically, so that, in a non-activated state, the fluid flow passing a first outlet (33) is greater than the fluid flow passing a second outlet (34) and the branching is only activatable for the purpose of sending a microparticle detected by the detection unit into the second outlet (34).

10. Device according to one of Claims 1 to 8, **characterized in that** the inlets for the auxiliary fluid flows have a cross section in the form of sectors of a ring and surround the inlet for the fluid flow containing the microparticles in the form of a cylinder shell.

11. Device according to Claim 10, **characterized in that** the branching has a central outlet and at least two further outlets with a cross section in the form of sectors of a ring, which surround the central outlet in the form of a cylinder shell, so that incoming microparticles in a non-activated state of the device are conducted through the central outlet.

## Revendications

1. Dispositif, destiné à trier des microparticules (6) dans un courant de fluide (5), pourvu d'au moins un module de détection pour détecter des microparticules passant une zone de détection (7) dans le courant de fluide et pour générer un signal d'identification ;
d'une ramification, pourvue d'au moins une entrée (30, 31, 32) et d'au moins deux sorties (33, 34), au moins une sortie comportant un point de commutation (36) ; et
d'un module de commutation destiné à faire commuter la ramification en fonction du signal d'identification par une introduction locale passagère de chaleur sur au moins un point de commutation de la ramification, pour la réduction à court terme de la viscosité du fluide au point de commutation, de sorte qu'une microparticule détectée à l'aide de l'au moins un module de détection passe la sortie prédéfinie par le signal d'identification ;
le module de commutation étant conçu pour introduire de la chaleur dans le fluide, par rayonnement électromagnétique ;
la ramification comportant une paroi, qui au moins aux points de commutation (36, 38) est transparente pour le rayonnement électromagnétique ;
la ramification comportant au moins une entrée (30) pour le courant de fluide contenant les microparticules et au moins deux entrées (31, 32) encadrant l'au moins une entrée pour des courants de fluide additionnels, les entrées (31, 32) pour les courants de fluide additionnels comportant de préférence des points de commutation (38) et les courants de fluide additionnels servant à commander le courant de fluide (5) contenant les microparticules (6) ; et
les entrées (31, 32) pour les courants additionnels et/ou les sorties (33, 34) de la ramification comportant sur les points de commutation (36, 38) un tronçon à section transversale rétrécie ; **caractérisé en ce que** les tronçons à section transversale rétrécie sont posés en forme de méandres dans des plis, de sorte qu'au moins la majeure partie du rayonnement électromagnétique irradié pour la commutation soit absorbée dans le fluide.

2. Dispositif selon la revendication 1, **caractérisé en ce que** la ramification a une structure monolithique.

3. Dispositif selon la revendication 1 ou 2, **caractérisé en ce que** les dimensions de la ramification aux points de commutation (36, 38) et la longueur d'absorption du rayonnement électromagnétique sont adaptées les unes aux autres, de sorte que la longueur d'absorption du rayonnement électromagnétique se situe dans l'ordre de grandeur du trajet effectué par le rayonnement dans le fluide qui doit être chauffé.

4. Dispositif selon l'une quelconque des revendications 1 à 3, **caractérisé en ce que** l'au moins un module de détection est conçu pour émettre un rayonnement électromagnétique pour exciter une microparticule (6) se trouvant dans la zone de détection (7) et pour réceptionner et évaluer un rayonnement électromagnétique irradié ou rétrodiffusé par la microparticule (6) et pour générer un signal d'identification associé à une propriété de la microparticule (6) ; et **en ce qu'**au moins dans la zone de détection (7), la paroi de la ramification est transparente pour ledit rayonnement électromagnétique.

5. Dispositif selon l'une quelconque des revendications 1 à 4, **caractérisé en ce que** dans la zone des points de commutation (36, 38), les entrées (31, 32) pour les courants additionnels et/ou les sorties (33, 34) de la ramification sont entourées au moins en partie de canaux qui contiennent un fluide destiné au refroidissement.

6. Dispositif selon l'une quelconque des revendications 1 à 5, **caractérisé en ce qu'**à la perpendiculaire de la direction de pliage, la section transversale rétrécie est conçue de forme allongée, de sorte à donner naissance à une structure dont la disposition et l'extension dans l'espace est adaptée à la direction de propagation, à la longueur d'absorption et à la section transversale du faisceau du rayonnement électromagnétique (41) irradié pour la commutation.

7. Dispositif selon l'une quelconque des revendications 1 à 5, **caractérisé en ce que** les tronçons à section transversale rétrécie comportent des tronçons secondaires (43, 44, 45) pliés en forme de méandres, plusieurs de ces tronçons secondaires (43, 44, 45) étant placés côte à côte ou en superposition, de sorte à donner naissance à une structure dont la disposition et l'extension dans l'espace est adaptée à la direction de propagation, à la longueur d'absorption et à la section transversale du faisceau du rayonnement électromagnétique (41) irradié pour la commutation.

8. Dispositif selon l'une quelconque des revendications 1 à 7, **caractérisé en ce que** plusieurs ramifications (13, 17, 18) sont reliées ensemble de telle sorte qu'un mélange de microparticules de différents types, alimenté dans une ramification placée du côté entrée puisse être trié en groupes de microparticules de type identique.

9. Dispositif selon l'une quelconque des revendications 1 à 7, **caractérisé en ce que** la ramification est conçue de forme asymétrique, de sorte que dans un état non activé, le courant de fluide passant une première sortie (33) soit plus important que le courant de fluide passant une deuxième sortie (34) et la ramification n'est activable que pour écluser une microparticule détectée par le module de détection dans la deuxième sortie (34).

10. Dispositif selon l'une quelconque des revendications 1 à 8, **caractérisé en ce que** les entrées pour les courants de fluide additionnels présentent une section transversale en forme de secteur annulaire et entourent en forme d'enveloppe cylindrique l'entrée pour le courant de fluide contenant les microparticules.

11. Dispositif selon la revendication 10, **caractérisé en ce que** la ramification comporte une sortie centrale et au moins deux sorties supplémentaires de section transversale en forme de secteur annulaire, qui entourent la sortie centrale en forme d'enveloppe cylindrique, de sorte que des microparticules qui arrivent soient conduites à travers la sortie centrale dans un état non activé.
